# EUROPEAN PATENT SPECIFICATION

(11) **EP 3 969 851 B1**
(45) Date of publication and mention of the grant of the patent: **01.03.2023**
(21) Application number: 20722349.6
(22) Date of filing: 05.05.2020
(51) Int. Cl.: G01F 3/08, G01F 15/12

(54) **MEASUREMENT DEVICE FOR A LIQUID METER WITH SWING PISTON AND ASSOCIATED METER**
MESSVORRICHTUNG FÜR EINEN FLÜSSIGKEITSZÄHLER MIT SCHWINGKOLBEN UND ZUGEHÖRIGES MESSGERÄT
DISPOSITIF DE MESURE DESTINÉ À UN COMPTEUR DE LIQUIDE À PISTON OSCILLANT ET COMPTEUR ASSOCIÉ

(30) Priority: 17.05.2019 FR 1905218
(43) Date of publication of application: 23.03.2022
(73) Proprietor: Diehl Metering S.A.S., 68304 Saint Louis (FR)
(72) Inventor: MUNCK, Christophe, 68130 Hausgauen (FR); STEHLIN, Christophe, 68100 Mulhouse (FR); ONIMUS, Lydia, 68390 Battenheim (FR)
(74) Representative: Diehl Patentabteilung
(86) International application number: PCT/EP2020/062453
(87) International publication number: WO 2020/233981

(56) References cited:
- EP-A1- 0 681 163
- EP-A1- 1 255 095
- FR-A- 458 281
- FR-A- 1 127 361
- US-A- 3 492 868

## Description

The invention deals with the field of liquid volumetric meters and, in particular, with the field of water volumetric meters which implement a technique that is well known to the person skilled in the art, recognized for its accuracy and its reliability: the swing piston technique.

The water volumetric meters with swing piston comprise a measurement device formed by a chamber enclosing a piston held mobile on a flat bottom, along a radial partition, and between an internal cylindrical wall of said chamber and an external wall of a small guiding cylinder forming a well disposed at the centre of its bottom.

The principle of operation of these meters is detailed in the patent EP 0 681 163 B1. A given volume of water is conducted in two exhaust cells, towards an exhaust opening disposed on the other side of the partition. These cells are situated facing said exhaust opening and are formed, one by the space contained between the external wall of the piston and the internal wall of the chamber, and the other by the space contained between the external wall of the well and the internal wall of the piston. There is therefore a three-stage movement: intake, translation of a volume of water, and exhaust. This movement is in three double stages since it is performed simultaneously with a phase shift of π inside and outside the piston.

The water circulating in these pipelines conveys solid particles in suspension. These particles often originate from limescale which forms over time in the pipelines themselves, and which becomes detached from time to time, carried away by the circulating waters. Other times, these particles originate from iron oxide deposits formed in metal pipelines. Furthermore, the water to be metered very often transports even more other particles, such as particles of sand or, more generally, of siliceous materials.

When drawing water, that is to say when a subscriber to the water service opens a tapto draw the quantity of water that he or she needs at a given moment, the particles in suspension in the water are introduced into the metering device. There, they are driven in rotation by the piston and follow more or less the path of the water to the exhaust opening. When the water draw is finished, the piston is immobilized and the particles still in suspension in the water contained in the measurement device are slowly deposited at the bottom of the chamber because they generally have a specific weight greater than that of the water. They then form a concentrated deposit. The particles build up and are packed to thus form a wedge which is ceaselessly driven by the piston, in the forward direction thereof.

Now, the particles, and in particular the particles of siliceous material which are highly abrasive, scratch and permanently damage the internal lateral walls of the chamber, the internal and external walls of the piston, and the external walls of the well. The friction between the different elements of the device is then more intense and the plays that exist between the piston and the chamber are emphasized, which increases the water leaks between the cells. The accuracy and reliability of the measurement device are thus diminished.

Also, the build-up of particles slows down the rotation of the piston and falsifies the metering, particularly when this piston swings at low speed and it then becomes highly sensitive to the forces which oppose its rotation. The incorrect results then obtained are very often situated outside of the admissible limits defined by the legislation in force in most countries.

Moreover, the abovementioned wedge can stop the rotation of the piston and block it. In this case, it will be necessary to wait for a high flow rate draw of water for the water introduced to create, in the device, sufficient turbulence to disperse this wedge. The solid particles are then once again placed in suspension in the water by the piston which resumes its travel. However, they remain largely trapped in the device. It is only with time and with the proviso that the water introduced into the chamber is totally clear, that is to say totally free of particles, that all the particles will be eliminated. Otherwise, the blockage will probably occur again later.

In order to counter these phenomena, a simple solution consists in protecting the water metering device with a simple filter which does not allow said particles to pass. Said device is then covered with a membrane at the water intakes, membranes which retain all the abovementioned undesirable solid particles and substances.

EP 1255095 A1 discloses such a volumetric liquid meter of the oscillating piston type having a cylindrical measuring chamber including a bottom portion comprising a side wall and a bottom wall with an inlet port, a top portion comprising a cover with an outlet port, a fixed partition placed between the bottom and the top portion, a cylindrical piston placed eccentrically and guided to move inside the chamber and a filter engaged on said chamber to filter the liquid penetrating via the inlet port.

This solution does however have a drawback. In fact, depending on the size of the pores or the degree (level) of filtration, it may be that the filter may become clogged prematurely, preventing the correct operation of the meter. It is then necessary to proceed with a cleaning, even a replacement, of said filter, which requires an intervention on site and a period during which the meter is unusable which can be fairly long. Furthermore, depending on the nature and the effectiveness of the filter to be replaced, these interventions can prove expensive and require, for the technician, the availability of an entire batch of filters of different categories, depending on the filter to be replaced, which can be disadvantageous, notably in case of a break in supply for the desired filter. In some even more critical cases, the filter cannot be cleaned and/or replaced.

The aim of the present invention is to propose a measurement device which inexpensively mitigates the abovementioned drawbacks and which notably makes it possible, on the one hand, to avoid deterioration of said device by the solid particles introduced by the liquid to be metered and, on the other hand, avoid the slowing down and blocking of the piston, while offering good metrological performances even at low rate. Furthermore, it aims to overcome the problem consisting in frequently replacing clogged filters and of that consisting, for the technician, in the constraint of constantly having within reach a more or less significantly large set of different types of filters.

To this end, the subject of the present invention is a measurement device for a liquid meter with swing piston comprising:
- a hollow chamber pierced with at least one inlet opening and at least one outlet opening and limited by a cylindrical lateral wall, a bottom and a cover;
- a piston enclosed in said hollow chamber and kept mobile, along a partition, around a well;
and characterized in that said cover (and/or said hollow chamber) is covered by a filtering membrane having at least two surface zones with filters of differing degrees or levels of filtration.

Another subject is a device according to the invention characterized in that it is a liquid volumetric meter, and, in particular, a water volumetric meter implementing the swing piston technique.

The invention will be better understood from the following description, which relates to a preferred embodiment, given as a nonlimiting example, and explained with reference to the attached schematic drawings, in which:
[Fig. 1] represents a perspective three-dimensional view of a measurement device according to the invention;
[Fig. 2] represents a plan view of the device of figure 1 in a first stage;
[Fig. 3] represents a plan view of the device of figure 1 in a second stage of obstruction;
[Fig. 4] represents a plan view of the device of figure 1 in a third stage;
[Fig. 5] represents a plan view of the device of figure 1 in a fourth stage;
[Fig. 6] represents as plan view of the device of figure 1 in a fifth stage;
[Fig. 7] represents a plan view of the device of figure 1 in a sixth and final stage of obstruction.

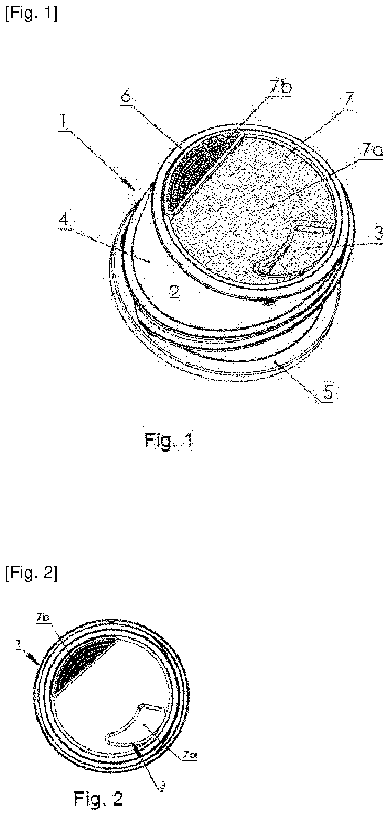

As can be seen in figure 1, the device according to the invention is a measurement device for a liquid meter with swing piston comprising:
- a hollow chamber 2 pierced with at least one inlet opening and at least one outlet opening (not visible) isolated from one another by a sealing system and limited by a cylindrical lateral wall 4, a bottom and a cover 6;
- a piston enclosed in said hollow chamber 2 and held mobile, along a partition, around a well;
and characterized in that said cover 6 (and the inlet opening or openings) is covered by a filtering membrane 7 having at least two surface zones 7a, 7b produced with portions of filtering membranes with filters of differing degrees or levels of filtration. Thus, all of the liquid entering into the hollow chamber 2 passes through said filtering membrane 7.

Advantageously, the device according to the invention is characterized in that all of the cover 6 is covered by said filtering membrane. That is what clearly emerges from figure 1.

According to another features, at least one portion of said cylindrical lateral wall 4 which comprises an inlet opening, notably a second, additional inlet, is covered at this level by a filtering membrane 7. This is not visible in figure 1.

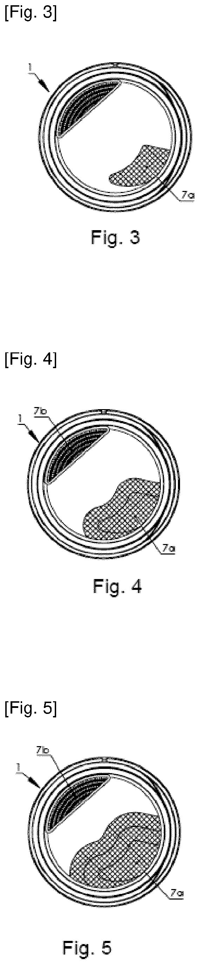

According to an important feature, said filtering membrane 7 has a surface zone 7a at the level of the inlet opening or openings 3, the degree or level of filtration of which is greater than that of the portions or surface zones 7b of the chamber which do not have any opening. The liquid, for example water, circulates between the inlet opening 3 and the cover 6 and the filtering membrane 7 and the obstruction front then travels as is schematically illustrated in figures 2 to 7.

The device according to the invention is further characterized in that said filtering membrane 7 has at least one first, fine filtration surface zone 7a with an average passage diameter of between 0.05 mm and 0.80 mm (limits included) and, at the same time, a second, coarser filtration surface zone 7b with an average passage diameter of between 0.20 mm and 2.00 mm, also limits included.

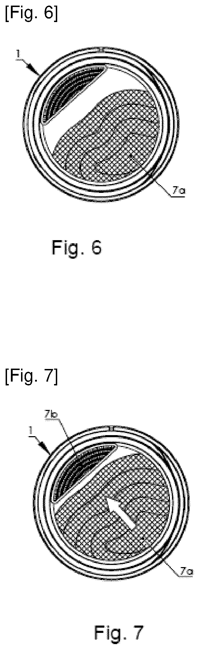

Advantageously and as represented in the attached figures, the device according to the invention is characterized in that the second, coarser filtration surface zone 7b is situated, on the cover 6, at a chosen distance as far away as possible from the inlet opening 3. It is then possible to observe the different phases of travel of the undesirable solid particles which migrate, in the direction of the arrow, as is represented in figures 2 to 7 and in particular in figure 7.

According to another advantageous feature, but one that is not essential in all cases, the device according to the invention is characterized in that a seal, notably an O ring seal, is disposed and mounted between the cover 6 and the filtering membrane 7.

For this, the person skilled in the art can, for example, provide an annular groove formed in said cover 6 which can notably be formed by moulding when producing the device which is generally produced in a suitable plastics material, such as polystyrene (PS).

Advantageously, the device according to the invention is also characterized in that the filtering membrane 7 is produced in the form of a single piece made of moulded or injected plastic material closely following the form of the cover 6 and, if appropriate, having a lateral skirt portion closely following the lateral cylindrical wall of the chamber 2 and intended to cover an opening situated on said lateral cylindrical wall 4.

In a particularly preferred embodiment, the device according to the invention is also characterized in that the part made of plastic material has one or more reinforcing radial ribs at the level of the cover 6 and/or one or more lateral vertical reinforcing ribs at the level of said skirt portion. These ribs have not been represented for greater clarity in the figures but typically have a thickness of a few mm, for example 1 mm to 6 mm.

The device according to the invention is also characterized in that the coarse filtration zone is produced in the form of an annular portion extending, for example over a quarter circle of a cover 6 which would be produced in the form of a circular disc.

In the nonlimiting embodiment given by way of example and illustrated in figures 1 to 7, the coarse filtration zone has a geometry composed of a non-radial straight segment linking a curved segment of a circular arc of a circle concentric to that of the cover 6 but of smaller radius. Advantageously, the two opposing edges forming this surface filter portion 7b with the coarser filtration capabilities (less efficient because it allows particles of greater dimensions than those that can pass through the meshes or pores of the filter of the fine filtration portion 7a to pass) are rounded outwards (see for example figure 1).

Finally, the device according to the invention is finally characterized in that it is a liquid volumetric meter and, in particular, a water volumetric meter implementing the swing piston technique.

Figures 2 to 7 show how the flow of water evolves as the pores of the first fine filter (surface zone 7a) become obstructed. The second filter has pores of relatively larger average diameter than that of the first filter and, in absolute terms, the second filter allows much larger particles to pass than those retained by said first filter. In other words, the second filter is coarser than the first fine filter. As can be seen in said figures, the second filter is advantageously disposed so as to be as far away as possible from the first fine filter. Thus, the movement and the progression of the obstruction or of the obstruction front takes place as slowly and progressively as possible across all the surface of the cover.

Of course, the invention is not limited to the embodiment described and represented in the attached drawings. Modifications remain possible, notably from the point of view of the construction of the various elements or by substitution of technical equivalents without in any way departing from the scope of protection of the invention.

## Claims

1. Measurement device (1) for a liquid meter with swing piston comprising :
- a hollow chamber (2) pierced with at least one inlet opening (3) and at least one outlet opening and limited by a cylindrical lateral wall (4), a bottom (5), and a cover (6);
- a piston enclosed in said chamber and held mobile, along a partition, around a well;
wherein said cover (6) is covered by a filtering membrane (7),
**characterized in** said filtering membrane (7) having at least two surface zones (7a, 7b) produced with portions of filtering membranes with filters of differing degrees of levels of filtration.

2. Device according to Claim 1, **characterized in that** all of the cover (6) is covered by said filtering membrane (7).

3. Device according to Claim 1 or 2, **characterized in that** at least one portion of said cylindrical lateral wall (4) which comprises an inlet opening, notably an additional second inlet, is covered at this level by a filtering membrane (7).

4. Device according to any one of Claims 1 to 3, **characterized in that** said filtering membrane has a surface zone at the level of the inlet opening or openings (3), the degree or level of filtration of which is greater than that of the portions of the chamber not having any opening.

5. Device according to any one of Claims 1 to 3, **characterized in that** said filtering membrane has at least one first fine filtration surface zone with an average passage diameter of between 0.05 mm and 0.80 mm, limits included, and, at the same time, a second coarser filtration surface zone with an average passage diameter of between 0.20 mm and 2.00 mm, limits included.

6. Device according to any one of the preceding claims, **characterized in that** the second coarser filtration surface zone is situated, on the cover (6), at a chosen distance as far as possible from the inlet opening (3).

7. Device according to any one of the preceding claims, **characterized in that** a seal, notably an O ring seal, is disposed and mounted between the cover (6) and the filtering membrane (7).

8. Device according to any one of the preceding claims, **characterized in that** the filtering membrane (7) is produced in the form of a single part made of moulded or injected plastic material closely following the form of the cover (6) and, if appropriate, having a lateral skirt portion closely following the lateral cylindrical wall of the chamber (2) and intended to cover an opening situated on said lateral cylindrical wall (4).

9. Device according to the preceding claim, **characterized in that** the part made of plastics material has one or more radial reinforcing ribs at the level of the cover (6) and/or one or more lateral vertical reinforcing ribs at the level of said skirt portion.

10. Device according to any one of the preceding claims, **characterized in that** the coarse filtration zone is produced in the form of an annular portion extending, for example over a quarter circle of a cover (6) which would be produced in the form of a circular disc.

11. Device according to any one of the preceding claims, **characterized in that** it is a liquid volumetric meter and, in particular, a water volumetric meter implementing the swing piston technique.

## Patentansprüche

1. Messvorrichtung (1) für einen Flüssigkeitszähler mit Schwingkolben, umfassend:
- eine Hohlkammer (2), die mit mindestens einer Einlassöffnung (3) und mindestens einer Auslassöffnung versehen ist und durch eine zylindrische Seitenwand (4), einen Boden (5) und eine Abdeckung (6) begrenzt wird;
- einen Kolben, der in der Kammer eingeschlossen ist und entlang einer Trennwand um eine Vertiefung herum beweglich gehalten wird;
wobei die Abdeckung (6) durch eine Filtermembran (7) bedeckt ist,
**dadurch gekennzeichnet, dass** die Filtermembran (7) mindestens zwei Oberflächenbereiche (7a, 7b) aufweist, die mit Filtermembranteilen mit Filtern von verschiedenen Filtrationsgraden hergestellt sind.

2. Vorrichtung nach Anspruch 1, **dadurch gekennzeichnet, dass** die gesamte Abdeckung (6) durch die Filtermembran (7) bedeckt ist.

3. Vorrichtung nach Anspruch 1 oder 2, **dadurch gekennzeichnet, dass** mindestens ein Teil der zylindrischen Seitenwand (4), der eine Einlassöffnung, insbesondere einen zusätzlichen zweiten Einlass, umfasst, durch eine Filtermembran (7) bedeckt ist.

4. Vorrichtung nach einem der Ansprüche 1 bis 3, **dadurch gekennzeichnet, dass** die Filtermembran einen Oberflächenbereich auf Höhe der Einlassöffnung oder -Öffnungen (3) aufweist, dessen Filtrationsgrad höher als der der Teile der Kammer ist, die keine Öffnung aufweisen.

5. Vorrichtung nach einem der der Ansprüche 1 bis 3, **dadurch gekennzeichnet, dass** die Filtermembran mindestens einen ersten Feinfiltrationsoberflächenbereich mit einem durchschnittlichen Durchgangsdurchmesser von zwischen 0,05 mm bis 0,80 mm, Grenzen eingeschlossen, und gleichzeitig einen zweiten Oberflächenbereich mit gröberer Filtration mit einem durchschnittlichen Durchgangsdurchmesser von zwischen 0,20 mm bis 2,00 mm, Grenzen eingeschlossen, aufweist.

6. Vorrichtung nach einem der vorhergehenden Ansprüche, **dadurch gekennzeichnet, dass** sich der zweite Oberflächenbereich mit gröberer Filtration an der Abdeckung (6) in einem ausgewählten Abstand so weit wie möglich von der Einlassöffnung (3) befindet.

7. Vorrichtung nach einem der vorhergehenden Ansprüche, **dadurch gekennzeichnet, dass** eine Dichtung, insbesondere eine O-Ringdichtung, zwischen der Abdeckung (6) und der Filtermembran (7) angeordnet und montiert ist.

8. Vorrichtung nach einem der vorhergehenden Ansprüche, **dadurch gekennzeichnet, dass** die Filtermembran (7) in Form eines einzigen Teils aus geformtem oder gespritztem Kunststoffmaterial hergestellt ist, das der Form der Abdeckung (6) folgt und gegebenenfalls einen seitlichen Schürzenteil aufweist, der der zylindrischen Seitenwand der Kammer (2) folgt und eine sich an der zylindrischen Seitenwand (4) befindende Öffnung abdecken soll.

9. Vorrichtung nach dem vorhergehenden Anspruch, **dadurch gekennzeichnet, dass** der aus Kunststoffmaterial hergestellte Teil eine oder mehrere radiale Verstärkungsrippen auf Höhe der Abdeckung (6) und/oder eine oder mehrere seitliche vertikale Verstärkungsrippen auf Höhe des Schürzenteils aufweist.

10. Vorrichtung nach einem der vorhergehenden Ansprüche, **dadurch gekennzeichnet, dass** der Grobfiltrationsbereich in Form eines ringförmigen Teils hergestellt ist, der sich zum Beispiel über einen Viertelkreis einer Abdeckung (6) erstreckt, die in Form einer kreisförmigen Scheibe hergestellt sein würde.

11. Vorrichtung nach einem der vorhergehenden Ansprüche, **dadurch gekennzeichnet, dass** sie ein Flüssigkeitsvolumenzähler und insbesondere ein Wasservolumenzähler ist, der die Schwingkolbentechnik einsetzt.

## Revendications

1. Dispositif de mesure (1) destiné à un compteur de liquide à piston oscillant comprenant :
une chambre creuse (2) percée d'au moins une ouverture d'entrée (3) et d'au moins une ouverture de sortie et limitée par une paroi latérale cylindrique (4), un fond (5), et un couvercle (6) ;
un piston enfermé dans ladite chambre et maintenu mobile, le long d'une cloison, autour d'un puits ;
ledit couvercle (6) étant recouvert par une membrane filtrante (7),
**caractérisé en ce que** ladite membrane filtrante (7) possède au moins deux zones de surface (7a, 7b) réalisées avec des parties de membranes filtrantes comprenant des filtres de différents degrés de niveaux de filtration.

2. Dispositif selon la revendication 1, **caractérisé en ce que** la totalité du couvercle (6) est recouverte par ladite membrane filtrante (7).

3. Dispositif selon la revendication 1 ou 2, **caractérisé en ce qu'**au moins une partie de ladite paroi latérale cylindrique (4) qui comporte une ouverture d'entrée, notamment une seconde entrée supplémentaire, est recouverte à ce niveau par une membrane filtrante (7) .

4. Dispositif selon l'une quelconque des revendications 1 à 3, **caractérisé en ce que** ladite membrane filtrante présente une zone de surface au niveau de la ou des ouvertures d'entrée (3), dont le degré ou le niveau de filtration est supérieur à celui des parties de la chambre ne présentant pas d'ouverture.

5. Dispositif selon l'une quelconque des revendications 1 à 3, **caractérisé en ce que** ladite membrane filtrante présente au moins une première zone de surface de filtration fine dont le diamètre de passage moyen est compris entre 0,05 mm et 0,80 mm, limites incluses, et, en même temps, une seconde zone de surface de filtration plus grossière dont le diamètre de passage moyen est compris entre 0,20 mm et 2,00 mm, limites incluses.

6. Dispositif selon l'une quelconque des revendications précédentes, **caractérisé en ce que** la seconde zone de surface de filtration plus grossière est située, sur le couvercle (6), à une distance choisie aussi éloignée que possible de l'ouverture d'entrée (3).

7. Dispositif selon l'une quelconque des revendications précédentes, **caractérisé en ce qu'**un joint, notamment un joint torique, est disposé et monté entre le couvercle (6) et la membrane filtrante (7).

8. Dispositif selon l'une quelconque des revendications précédentes, **caractérisé en ce que** la membrane filtrante (7) est réalisée sous la forme d'une pièce unique en matière plastique moulée ou injectée épousant la forme du couvercle (6) et présentant, le cas échéant, une partie jupe latérale épousant la paroi cylindrique latérale de la chambre (2) et destinée à recouvrir une ouverture située sur ladite paroi cylindrique latérale (4).

9. Dispositif selon la revendication précédente, **caractérisé en ce que** la pièce en matière plastique comporte une ou plusieurs nervures de renfort radiales au niveau du couvercle (6) et/ou une ou plusieurs nervures de renfort verticales latérales au niveau de ladite partie jupe.

10. Dispositif selon l'une quelconque des revendications précédentes, **caractérisé en ce que** la zone de filtration grossière est réalisée sous la forme d'une partie annulaire s'étendant, par exemple sur un quart de cercle d'un couvercle (6) qui serait réalisé sous la forme d'un disque circulaire.

11. Dispositif selon l'une quelconque des revendications précédentes, **caractérisé en ce qu'**il s'agit d'un compteur volumétrique de liquide et, en particulier, d'un compteur volumétrique d'eau mettant en œuvre la technique du piston oscillant.
